# EUROPEAN PATENT APPLICATION

(11) **EP 1 329 377 A2**
(43) Date of publication of application: **23.07.2003**
(21) Application number: 03250311.2
(22) Date of filing: 17.01.2003
(51) Int. Cl.: B62K 5/00

(54) **Improvements relating to karts**

(30) Priority: 18.01.2002 GB 0201098
(71) Applicant: Grogz Limited, Pilning, South Gloucestershire BS35 4LR (GB)
(72) Inventor: Vanhinsbergh, Greg, Pilning, South Gloucestershire, BS35 4LR (GB)
(74) Representative: Stoner, Gerard Patrick

(57) **Abstract**

A wheeled free kart, preferably for powering by kite, has a seat unit (7) mounted transversely slidably in the kart chassis, so that the rider can adjust the kart's centre of gravity according Lo the relative direction of the wind. Other features disclosed for the kart are a modular element and joint construction for chassis members (1), foot-operated steering which can also operated brakes, and wheels with annular flanges to dig into soft ground e.g. sand and thereby reduce leeway.

## Description

### FIELD OF THE INVENTION

This invention has to do with various developments and improvements in the construction of karts. In preferred aspects the proposals relate to non-motorised or free karts, such as may be driven by a sail, a kite on a line or by gravity down a slope. Some of the features described have particular reference to kite-powered karts (sometimes called kite buggies or para-karts). However some other proposals herein are also usable in driven karts having a drive motor.

### BACKGROUND

Para-karts have simple three-cornered chassis with two rear wheels and a single front wheel, steerable by axial foot bars projecting to either side. The rider sits in a simple central seat and holds the line of a kite or parafoil which pulls the kite along. Skill is needed to steer the kart while controlling the kite - not necessarily with the kite line along the line of travel - simultaneously. Steering can be difficult and the kart unstable when reaching, i.e. with the wind blowing across the line of travel.

### OUR NEW PROPOSALS

We now propose various developments in the field of karts.

A first proposal is to provide a free kart with plural laterally-spaced steerable wheels, for example a pair of steerable front wheels and/or a pair of steerable rear wheels. With a wind-powered kart - preferred - this enables steering even when the windward side of the kart lifts from the ground, and improves on the known kart with a single steerable front wheel.

A further proposal for a free kart, preferably combined with the previous proposal, is to provide both front and rear sets of laterally-spaced wheels, e.g. four wheels in all. This apparently routine feature is novel in kite-powered karts and has an unexpected benefit, namely that the line of the front and rear wheels on a given side is parallel or more nearly parallel to the line of travel. For this reason, and unlike a three-wheeled kart, it can roll controllably even when heeling as mentioned above. When a three-wheeled kart heels, the line between the rolling front and rear wheels is steeply angled to the direction of travel and causes instability.

A further set of proposals herein relate to the construction of the kite frame or chassis.

A first proposal in this respect is a modular construction of the frame which enables interchange of longitudinal and/or transverse elongate frame elements for others of different construction. Joint structures or connectors may be provided which enable the releasable connection - preferably rigid connection - of one module to another. These joint structures or connectors may for example incorporate clamp or socket portions shaped and dimensioned in a standard way to enable the connection of a variety of components or modules designed to conform. For example, corner connectors may enable the dismantling of the longitudinal chassis elements from the transverse. Further joint elements may be provided, preferably the same as the corner elements, for connecting transverse elements e.g. seat supports or engine supports, at intermediate points between the front and rear of the frame.

Detachable and/or interchangeable modules in lines with this concept could be any or all components of the kart, for example any one or more of wheels, hubs, chassis length units, chassis transverse units, steering units, wheel bearings, brake modules etc. A first advantage is in enabling a given set-up to be adapted or improved. For example a kart with aluminium chassis tubes could be upgraded by substituting titanium or carbon fibre tubes while retaining the other gear (wheels, steering, brakes etc.). Or, wheels or entire wheel-and-axle units could be interchanged according to ground conditions.

Further adaptations may enable the kart to be used as a trolley, e.g. by providing for an upstanding handle element to be connected to the chassis at one end.

Another possible advantage of such a modular, demountable construction may be the ability to disassemble the kart into compact form for transport or storage without the need for special engineering expertise or numerous tools.

A further proposal in relation to the chassis or body of a kart is to mount the kart seat movable transversely relative to the chassis. This has particular relevance in wind-powered karts. The force from the kite or sail acts well off the ground and applies a tilting moment to the kart via the rider. As in a sailing boat, the rider seeks to reduce tilt or avoid overturning by shifting their weight to windward, in so far as the wind is across the line of travel. By mounting a seat unit so that it can shift sideways on the chassis, this movement can be enhanced or facilitated. The feature is not necessarily limited to wind-powered karts. It may for example be relevant when cornering at high speeds in other types of kart.

Preferably the seat unit is mounted transversely slidably on the chassis. The chassis may provide a laterally-extending track or rail structure, preferably front and rear track or rail structures to support the seat unit at front and rear positions. The seat unit may have slider portions which engage the track/rail to enable lateral sliding while retaining it vertically and fore-and-aft. Other constructions enabling lateral sliding may be envisaged.

Preferably the seat mounting includes a lateral control or location arrangement enabling the lateral position of the seat relative to the chassis to be selected or secured. A preferred version has a releasable clamp or lock which can hold the seat unit at a selected lateral position relative to the chassis, but which can be released in use - preferably one-handedly - to enable lateral movement. The lateral position may be securable at any of a range of positions. This might be for example by a clamp or lock on the seat unit which engages a track or rail as mentioned above, switchable between a locked condition gripping or locking to the track/rail and a released condition allowing lateral sliding. The adjustment may be continuous, or selected lockable positions may be provided (e.g. a central position and one or more selected spacings to either side of it where the mounting arrangement can form a releasable locked engagement).

A further proposal herein with particular relevance to a hands-free kart such as a kite-powered kart is a foot-operated steering system. We mentioned above the preferability of providing at least two-wheel steering. This may be provided using a lateral track rod and track arms connecting to pivoted stub axles, rather than by a bogie system which is less stable.

A preferred, foot-operated steering system has a pivotable foot rest connecting to a steering column, preferably a substantially upright steering column, which drives the track rod(s) of the steering gear. The well known Ackermann steering system is appropriate, whether with hand steering via handlebars or a wheel, or via the pivotable foot rest or foot bar mentioned above.

A further proposal herein is to combine a brake-operating function with the steering control member. This again may be relevant for both hand-operated or foot-operated steering, although the latter is preferred. Either way, it enables these functions to be controlled using a minimum of limbs.

Broadly speaking, the steering control member (e.g. wheel, handlebar, foot bar or foot rest) is mounted for both a steering movement in one sense (typically a rotation about a column axis) and a brake-actuating movement in another sense, e.g. a rotation about an axis transverse to the steering movement axis, or a linear movement which may be transverse to or along the steering rotation axis, or a combination of these.

The braking effect may act on the wheels via any suitable connector and brake arrangement actuated from the steering component. Actuation may be for example via a Bowden cable communicating with one or more shoe, disc or drum brakes associated with one or more of the kart wheels. Preferably rear wheels are braked. The braking system is preferably biased, e.g. in a conventional way, towards the unbraked condition. The different senses of motion for actuating the steering and actuating the braking via the same controls can be selected to minimise the possibility of inadvertently braking whilst steering.

Preferably the brakes can be actuated irrespective of the degree of steering being applied.

Note that the provision of brakes on a kite-powered kart is in itself a novelty.

One particularly preferred arrangement has a pair of steerable front wheels steered via a track rod arrangement actuated by a central foot-operated steering column. A foot rest at the top of the steering column has right and left foot elements for the respective feet, projecting to the corresponding sides of the steering column axis. The foot rest may have straps, covers, grips or other retaining means to help keep the feet in position. The steering column axis is substantially upright, preferably with not more than 20 degrees of tilt fore-and-aft. The foot rest is coupled to the steering column via a coupling which is rotationally fixed but allows fore-and-aft sliding of the foot rest element transverse to the column axis. This fore-and-aft sliding movement operates a brake-actuating coupling, e.g. the inner cable of a Bowden connector leading to a brake. For obvious reasons it is preferred that a forward push corresponds to a braking effect. Provided that the rider is firmly seated he/she can easily apply braking only, steering only, or a combination of the two.

A final general proposal relates to the wheels of wind-powered karts, for use on soft surfaces e.g. sand on which such karts are typically run. According to our proposal one or more and preferably all of the kart wheels carries a co-rotating annular projection which projects radially beyond the main ground-engaging surface of the wheel and is axially narrower than that surface so that it tends to embed in a soft ground surface as the kart travels over it. The annular projection is preferably circumferentially continuous, although it may be serrated or intermittent to improve its ground penetration. By becoming embedded in the ground's surface, it helps to prevent lateral sliding or leeway of the kart in a manner analogous to the keel of a boat. This increases drive and control with side winds. The form and size of the projection may be selected in accordance with the nature of the ground surface. The greater the radial projection, the greater the prevention of sliding but also the greater the risk of breakage or hindering steering. The narrower the projection (axially of the wheel) and the sharper its edge, the more readily it will penetrate the surface and the less resistance it will offer to forward progress but again it must have sufficient strength and toughness. Tyred wheels or other conventional wheels may be adapted by securing a disc or annulus of appropriate diameter coaxially across the face of the wheel, e.g. screwing onto or snapping into the hub. In another version, the projection may be formed integrally with or embedded in the ground-contacting element of the wheel, especially if this is a solid non-inflated body. A stiff but tough material is preferred, e.g. metal or suitable engineering-grade plastics.

It will be appreciated that the proposals above although independent can be combined in various ways. An embodiment combining the various proposals is now described with reference to the accompanying drawings, in which
Fig. 1 is an oblique view from front and one side of a free kart;
Fig. 2 is a view from behind and one side;
Fig. 3 illustrates the proportions of the kart with an average-sized person aboard;

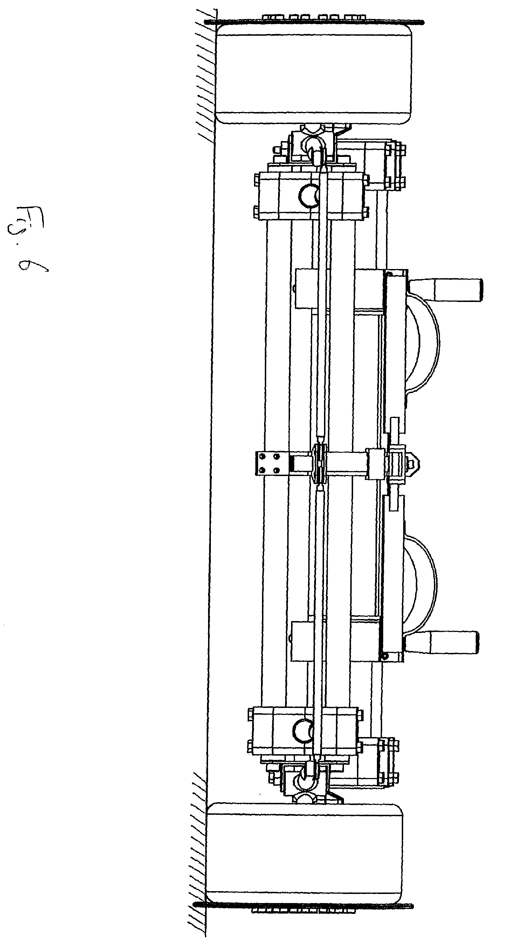

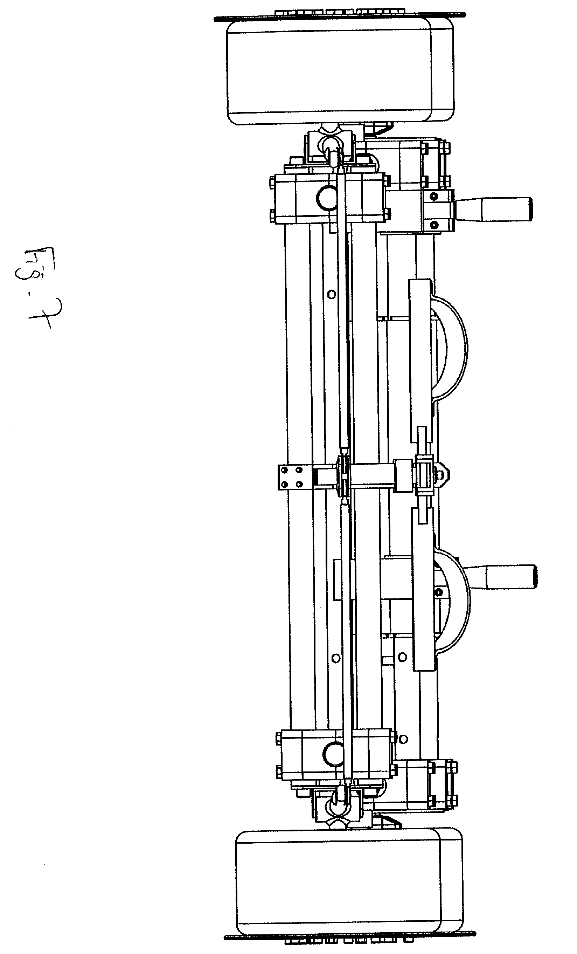

Figs. 4, 5, 6 and 7 are front and rear views showing more particularly the front steering arrangement, rear brakes and a modification of the wheel construction;

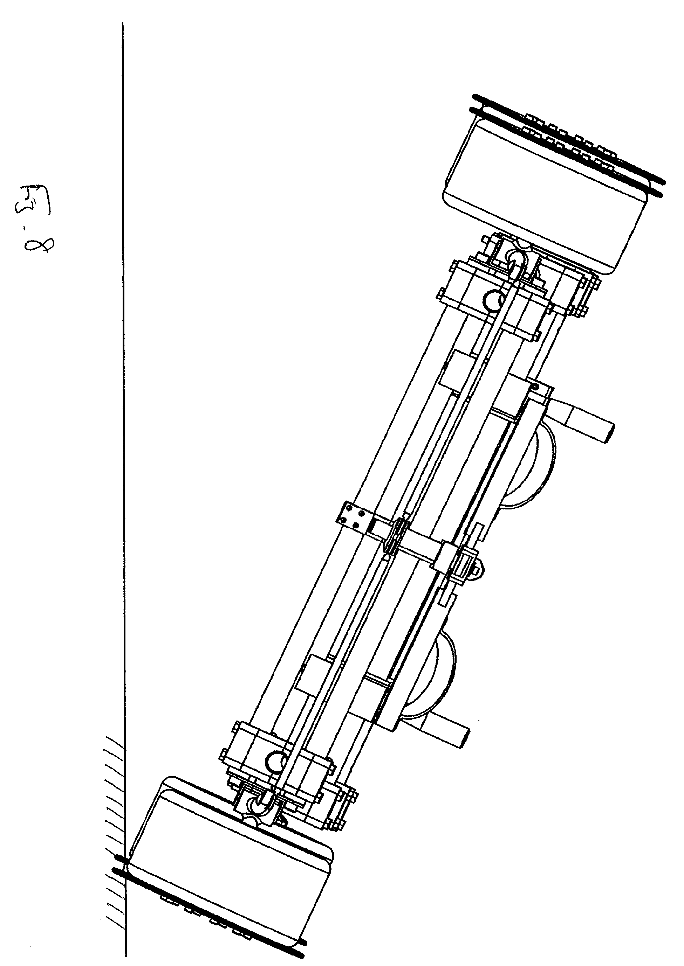

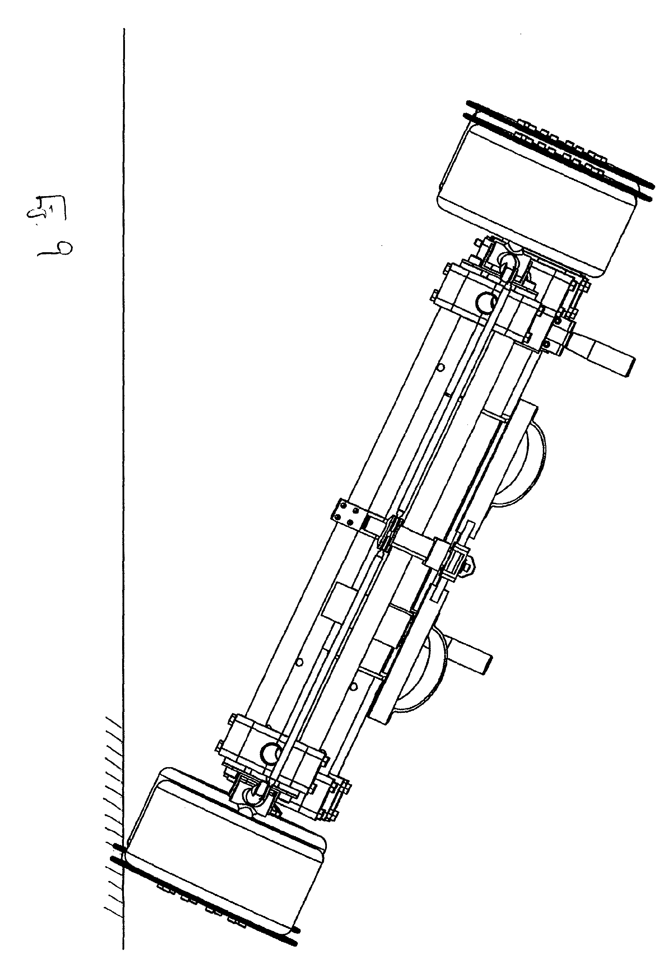

Fig. 8, 9 and 10 are front views showing the kart tipped relative to a ground surface, with the seat unit in a central position, a windward position and (Fig. 10) with a rider aboard;
Fig. 11 shows a rear corner of the kart with detail of a slidable seat unit catch;
Fig. 12 shows the catch close up, with a guide component removed and in the unlocked position;
Fig. 13 is a corresponding view but in the locked position;
Figs. 14 and 15 show the locked and unlocked positions with part of the slider housing removed, and illustrating unlocked and locked conditions of the operating handle;
Fig. 16 is a front oblique view showing the foot-operated steering/brake control in a free, centred position;
Fig. 17 shows the same condition from the rear, but with a guide/coupling block removed to reveal details of the coupling;
Fig. 18 is similar to Fig. 17 but with the guide/coupling block in place;
Fig. 19 shows the brakes applied without steering;
Fig. 20 shows steering without applying the brakes;
Fig. 21 shows steering with brakes applied;
Figs. 22, 23 and 24 further illustrate the wheel modifications of Figs. 6, 7.

First, the general structural elements of the kart are described. It should be appreciated that in the normal manner of a kart as opposed to a car this is intrinsically a small lightweight construction, typically with unsprung wheels, weight not more than 30kg and length not more than 1.5m.

The chassis consists of left and right longitudinal structural tubes 1 spaced apart, connected together between their front ends by upper and lower front transverse tubes 21,22 and between their rear ends by upper and lower rear transverse tubes 31,32 at an intermediate point somewhat towards the rear, a further pair of upper and lower intermediate transverse tubes 41,42 span between the side members 1. It should be noted that these structural tubes are all of uniform and similar diameter and simple circular section.

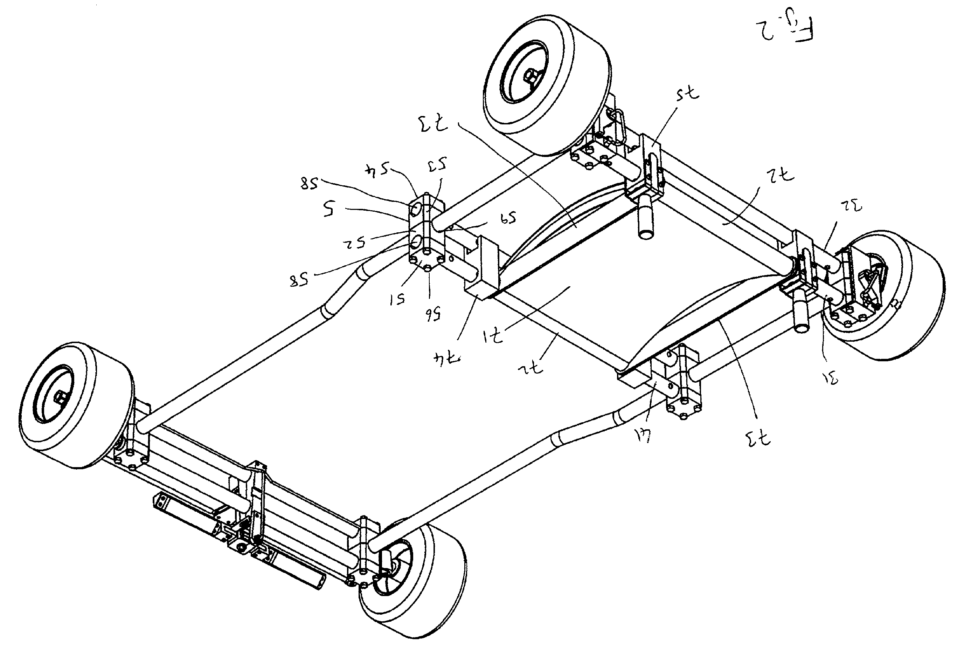

Characteristic union blocks 5 hold these chassis members together. See Fig. 2 for the reference numbers. There are six such blocks, and each enables the releasable connection of a longitudinal member to two (upper and lower) transverse members. Each union block consists of a stack of segments - a top outer segment 51, top inner segment 52, bottom inner segment 53 and bottom outer segment 54 - bolted together through the stack by a set of corner bolts 56. The opposed faces of the outer and inner segments have hemicylindrical cut-outs so that they define between them a pair of laterally-directed clamping recesses 58 which receive the ends of the upper and lower transverse chassis members. They may simply clamp the ends. In this embodiment however all the transverse members have similarly outwardly flanged ends and the laterally-directed recesses of the union block have circumferential grooves which receive the flanges and hold the members securely with only light clamping. The opposed faces of the upper and lower inner segments have corresponding recesses defining a longitudinally-extending cylindrical opening 59 to receive and grip a longitudinal chassis member 1 between the upper and lower transverse members. Note that by releasing the bolts the entire chassis can be quickly disassembled either entirely or into subassemblies. A single tool suffices. If chassis elements become damaged, or if it is wished to exchange them for others of different materials or lengths, there is no need to modify other components.

A seat installation is mounted between the rear and intermediate transverse elements. It has a flexible fabric seat portion 71 sewn around front and rear support sleeves 72 which fit slidably over the upper rear transverse chassis element 31 and the upper intermediate transverse chassis element 41. Left and right rigid side pieces 73 extend between the rear and intermediate frames to either side of the fabric seat 71. The front corners of the seat have free sliders 74 and the rear corners of the seat have lockable sliders 75 whose operation is described later.

This kart is designed to be kite-powered so there is no motive power arrangement of any kind and all four wheels are free-rotating. The four wheels are arranged substantially rectangularly, although the track at the rear is somewhat greater than at the front.

The rear wheels 92 are mounted on respective stub axles 95. These rear stub axles 95 are fixed in the corresponding rear union blocks, for example having end flanges like the transverse chassis members so that they can be held end-to-end with the latter. The front wheels 91 are mounted on front stub axles 96 which have kingpin pivots 97 on brackets secured into the ends of the upper and lower front transverse chassis tubes 21,22, so that they can be steered.

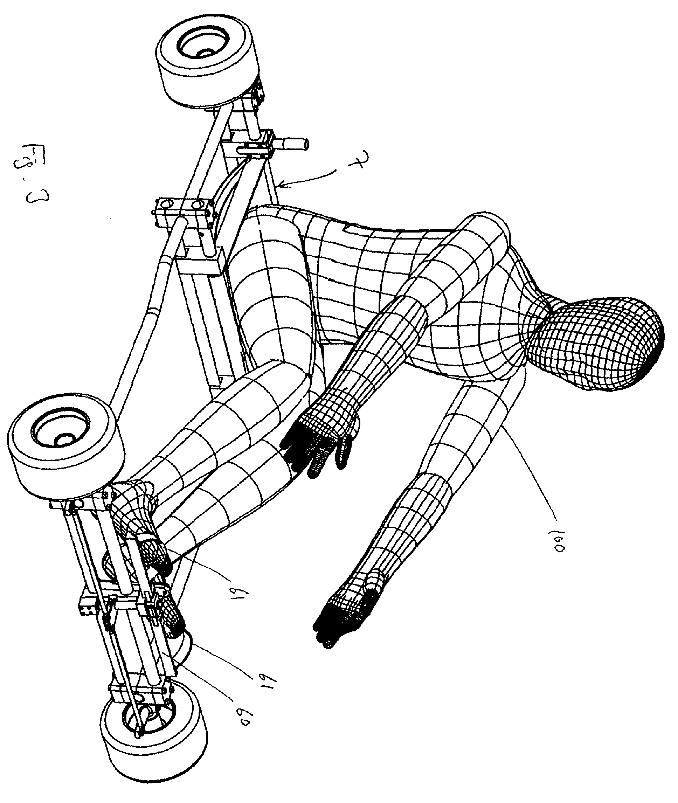

Fig. 3 shows the kart with a rider 100 sitting on the seat 7, with his feet resting through the retaining loops 61 of a transverse foot bar 60 which serves for both steering and braking the kart as will be described below. This leaves the rider's hands free for holding and controlling the lines of a kite or parafoil which pulls the kart along.

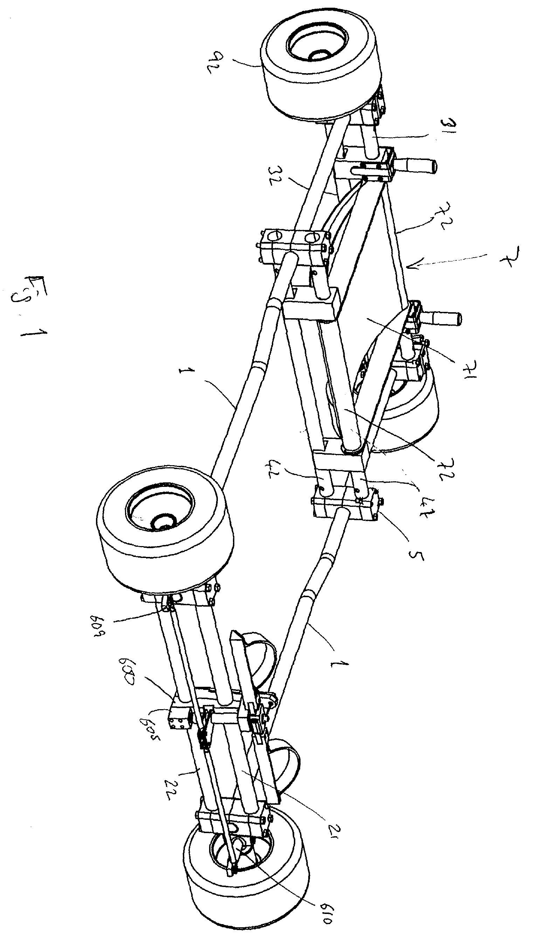

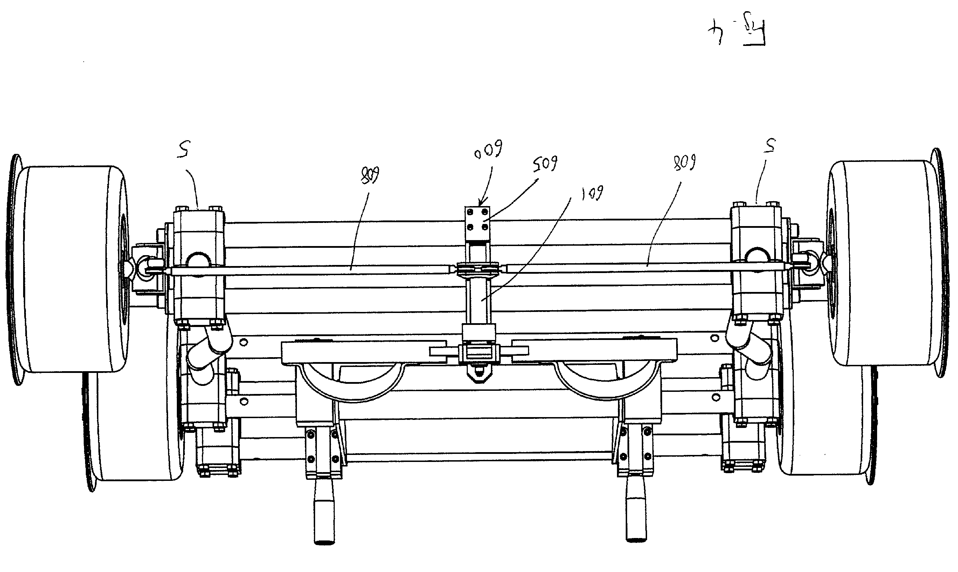

The steering and braking arrangements are now described with reference initially to Figs. 1, 4 and 16. A fixed central steering support 600 is clamped around the upper and lower front transverse chassis tubes 21,22. A steering column 601, substantially upright, is mounted rotatably through upper and lower column supports 604,605 projecting forwardly from the mounting block 600. The foot rest 60 is connected across the top of the steering column 601 with left and right portions projecting to either side of it, so that the rider can rotate the steering column by advancing and retracting left and right feet as appropriate.

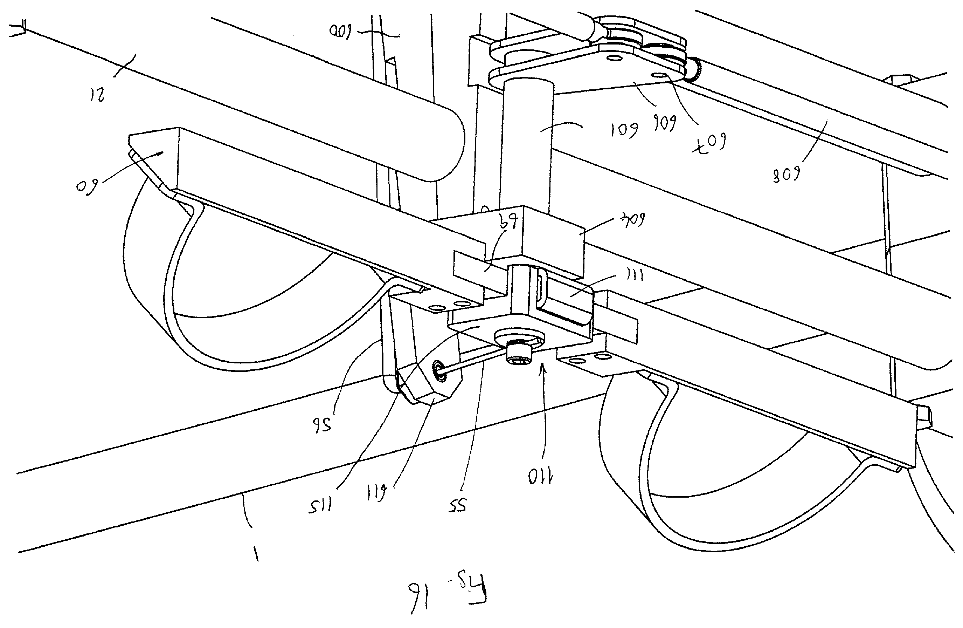

A steering arm 606 (Fig. 16) is connected rigidly near the foot of the column 601 to swing laterally as the column rotates, and has pivotal connections 607 to left and right track rods 608. The outer end of each track rod 608 connects via a pivot 609 (Fig. 1) with a respective track arm 610 fixed rigidly to the corresponding pivoting stub axle; each track rod/track arm makes a trapezium in the conventional manner of an Ackermann steering so that the inner wheel turns more than the outer.

By this means the illustrated embodiment provides two-wheel steering for the first time in a kite-powered kart.

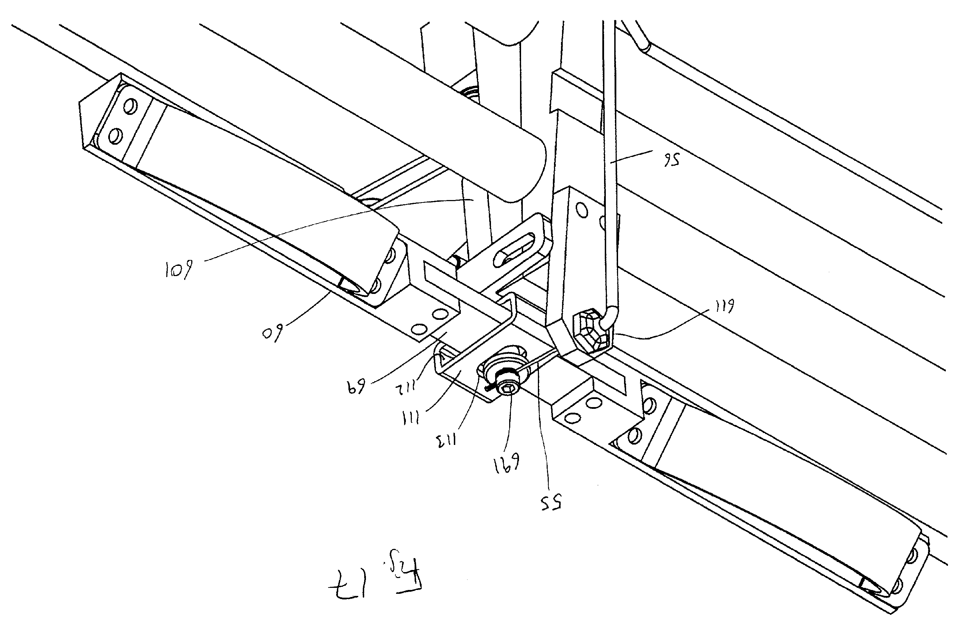

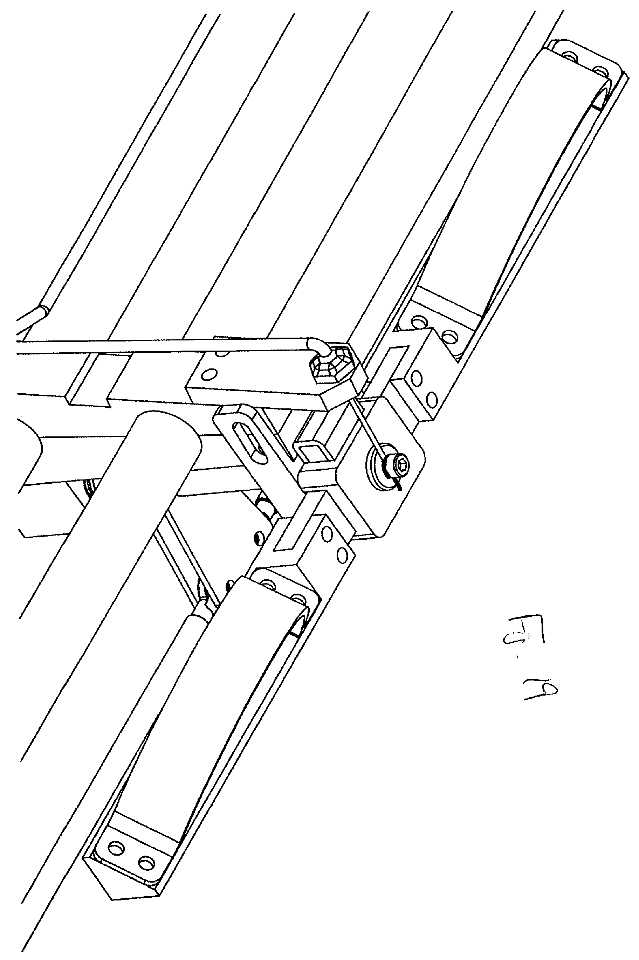

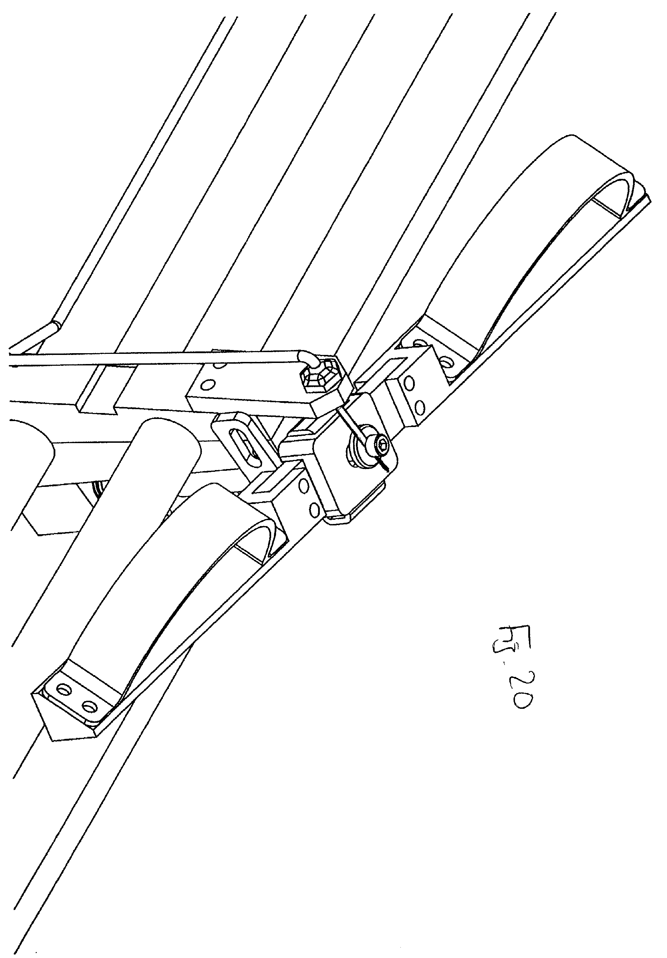

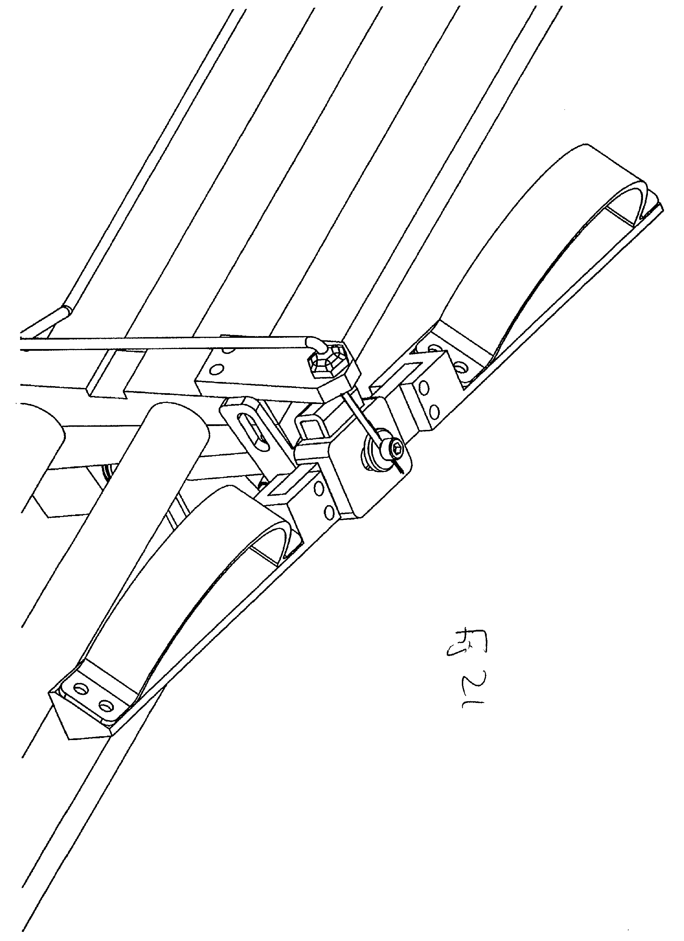

Next, refer to Figs. 16 to 21. The coupling arrangement 110 between the foot bar 60 and the steering column 601 is as follows. The left and right support elements of the foot bar are connected to the ends of a flat central bar 69 (Fig. 17) which passes through an oversize slot 112 in a rectangular-section sleeve 111 fixed rigidly to the top of the steering column. The top of the sleeve 111 is penetrated by a further longitudinally elongate slot 113, and a screw clamp 691 on the top of the central foot bar element 69 projects up through this slot 113. The screw clamp catches the central wire 55 of a Bowden cable 56 whose outer sleeve is anchored to an upstanding extension 611 from the steering mounting block 600, immediately behind the foot rest. It can be seen from Fig. 17 that the fore-and-aft freedom of the foot rest bar 69 to slide in the slot 112 of the sleeve 111 on top of the steering column enables the user, by pushing the bar 69 forwardly in that slot 112, to actuate the Bowden cable 56.

The structure shown in Fig. 17 would not permit steering, since the central flat bar 69 of the foot rest 60 can turn through a substantial angle without turning the steering column. To complete the construction, a guide block 115 (Fig. 16) fits down around the bar 69 and oversize sleeve 111 to prevent any rotation between them while still allowing sliding.

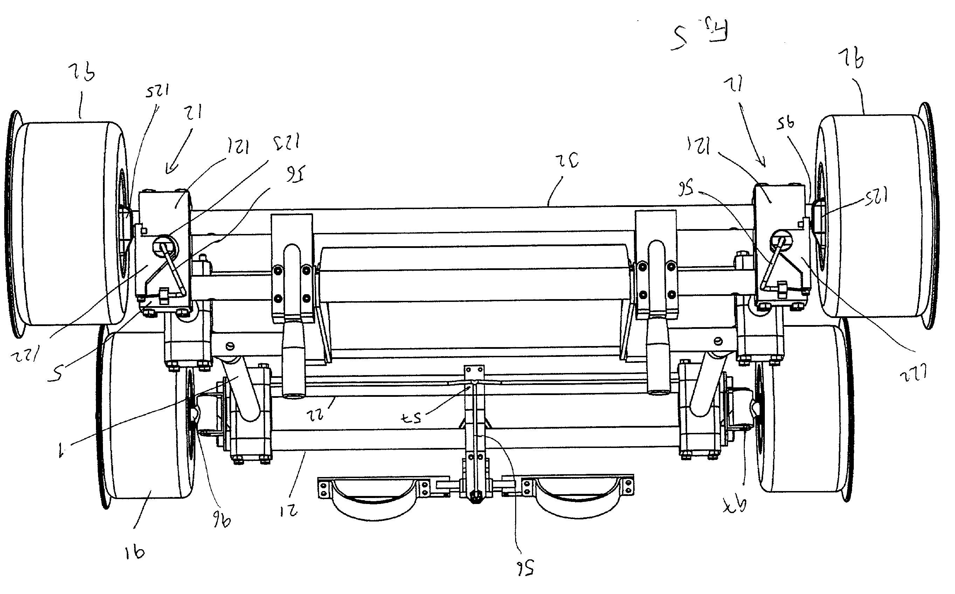

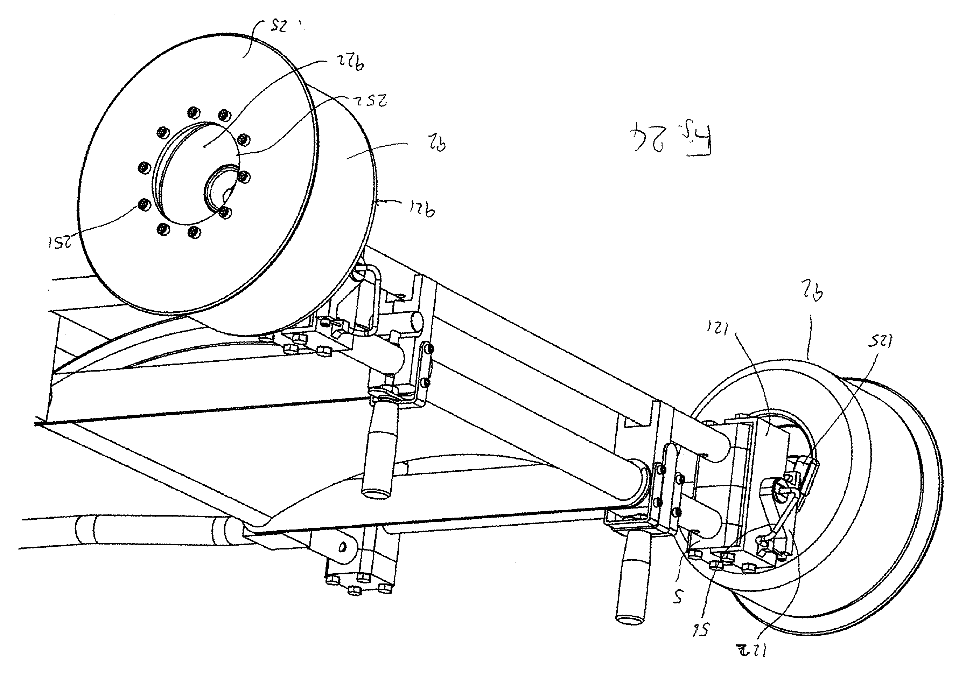

Refer next to Fig. 5 showing the operation of brake units 12 at each of the rear wheels. The Bowden cable 56 at the steering column divides at a Y-junction 57 into left and right cables which are led back through the side frame members 1 and through the rear union blocks 5, which carry mounting plates 121 on their rear surfaces. Each mounting plate has a pivot 123 including a central opening for the emergence of the respective Bowden cable 56, with a cantilever element 122 connected to be swung by the cable when the brakes are actuated, i.e. when the foot rest bar 60 is pushed. The cantilevers 122 are spring biased to pull on the cable so that the foot bar 60 spontaneously returns to the brakes-off condition when pressure is relaxed. Each cantilever 122 carries a brake shoe 125 positioned and shaped to act against the inner surface of the hub of the respective rear wheel 92. See also Fig. 24.

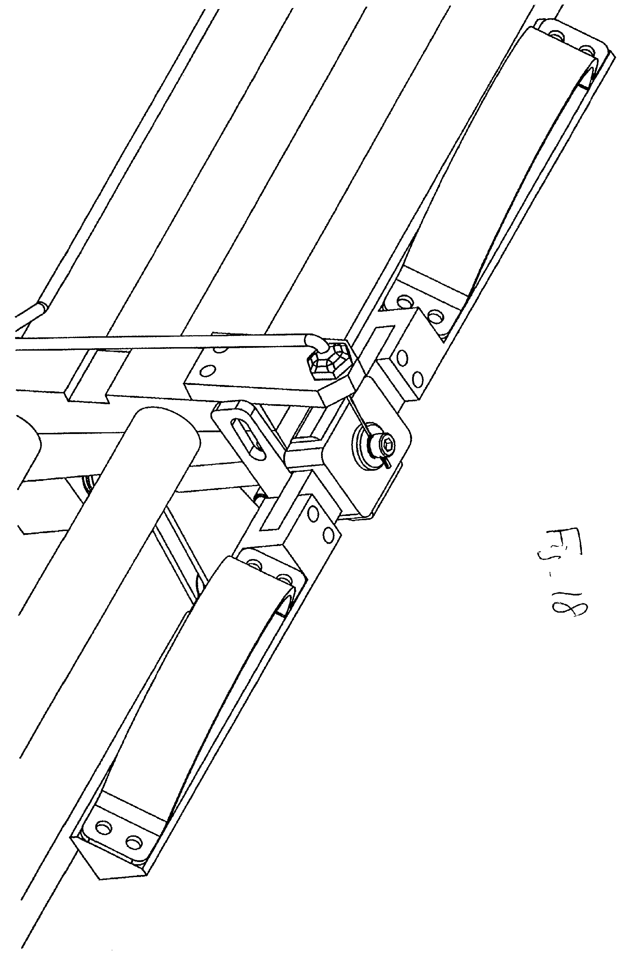

It will be noted with reference to Figs. 18, 19, 20 and 21 that the brakes can be applied without steering, the steering can be applied without brakes or both can be applied together.

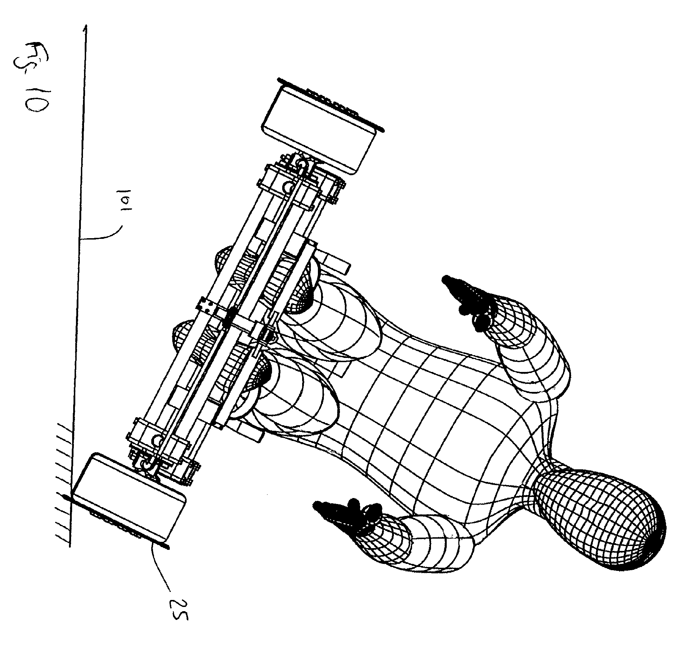

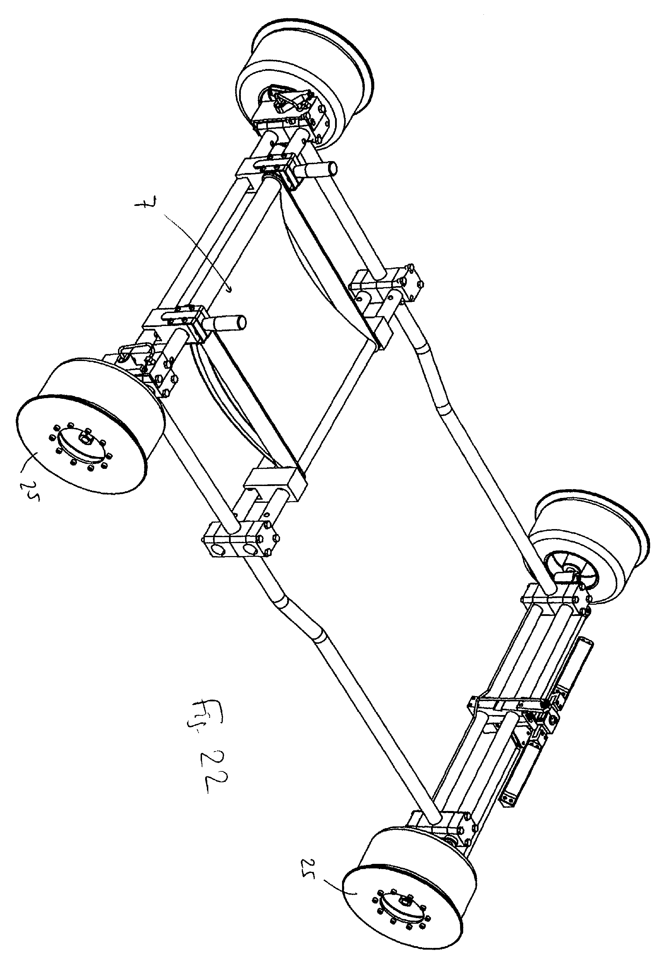

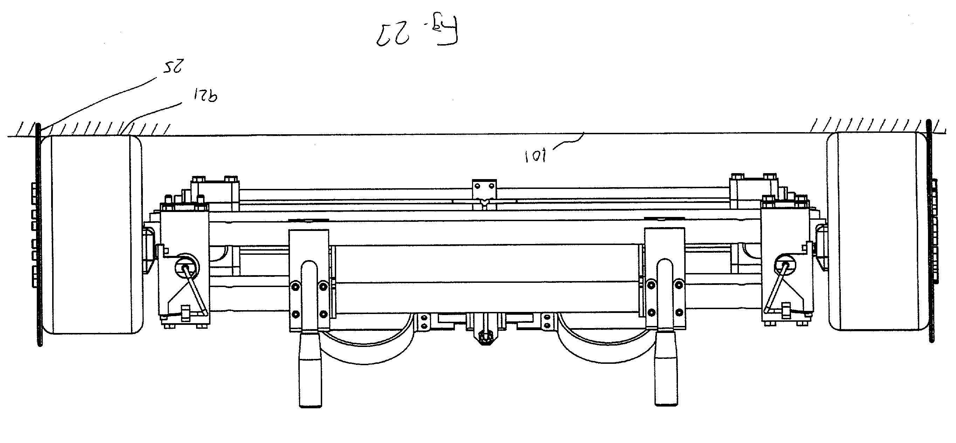

The next feature described is a modification of the wheels to enhance performance on a sand surface. Refer to Fig. 24. The rear wheel has a conventional broad tyre 921 carried on a hub 922; the tyre has a relatively broad ground-contacting surface. A thin flat disc 25 of metal or hard plastics material is attached to the outer face of the wheel by means of a set of securing bolts 251. The disc has a central aperture 252 so that the wheel can be removed from the axle if necessary without first removing the disc 25. The disc 25 has a smooth circular periphery whose radius is greater than that of the tyre surface. Similar discs are provided on all four wheels: see Fig. 22. On a sand surface 101 (Fig. 23) the contact surface 921 of the tyre lies on the sand without appreciably embedding itself, in the normal way. The thin edge of the disc 25 embeds itself easily for the excess radius, offering little resistance to forward rolling but presenting a substantial drag area against sideways sliding. In a condition of tilting of the kart as seen in Fig. 10, this embedding of the discs 25 in the sand surface 101 provides a valuable protection against side slip or leeway and so can improve performance of the kart when reaching by using the wind more efficiently.

Finally, the special mounting of the seat 7 is described in detail. The purpose of this is to allow the rider to shift the centre of gravity of the kart in motion by moving his or her weight from the centre of the kart to one side or the other. Transverse movability of the seat means that much more centre of gravity shift can be achieved than with mere leaning of the body.

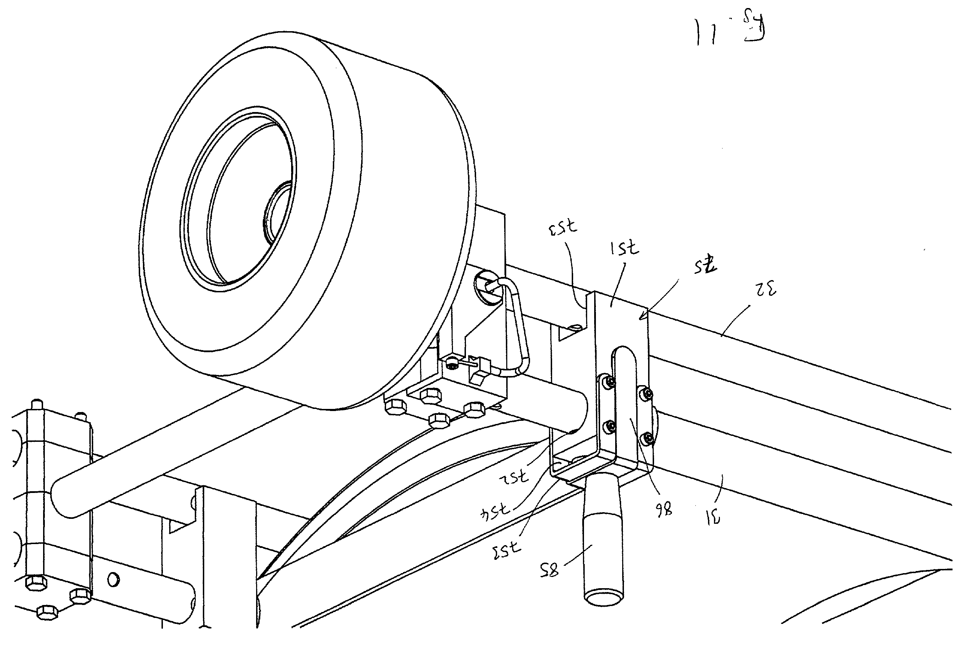

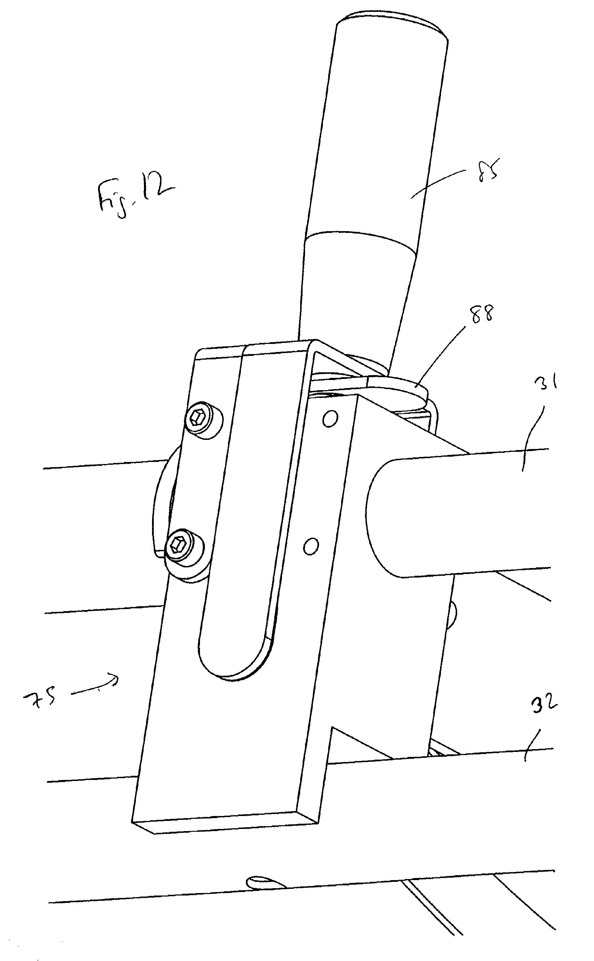

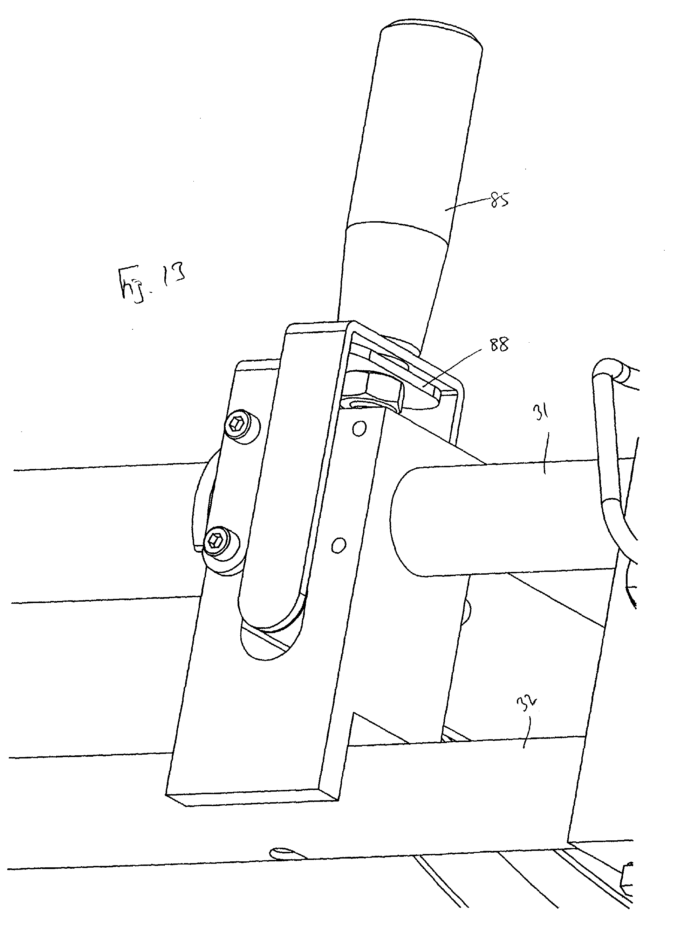

Referring firstly to Fig. 2, the front corners of the seat unit carry slider blocks 74 with holes to receive the upper transverse chassis elements 41 slidably, and downward recesses to fit slidably over the lower intermediate chassis element 42. Each rear corner of the seat unit has a corresponding slider block 75 with a top opening and a lower recess to slide on the upper and lower rear transverse chassis elements 31,32. The front blocks 74 slide passively along the rail or track provided by the transverse chassis elements. The rear blocks 75 have a more complex construction described now with reference to Figs. 11 to 15. With reference to Fig. 11, each slider unit 75 includes a housing 751 defining an upper hole 752 through which the frame element passes and a lower downwardly-open recess 753 which fits over and around the lower frame element 32. The handle 85 is connected to a control fork 86 having opposed limbs which fit to the front and rear of the housing 751, and are slidable up and down on the outside of the housing guided by inverted-U guide elements 753 bolted over the top of the housing 751. There is a small clearance 754 between the top of each guide element and the top of the housing block.

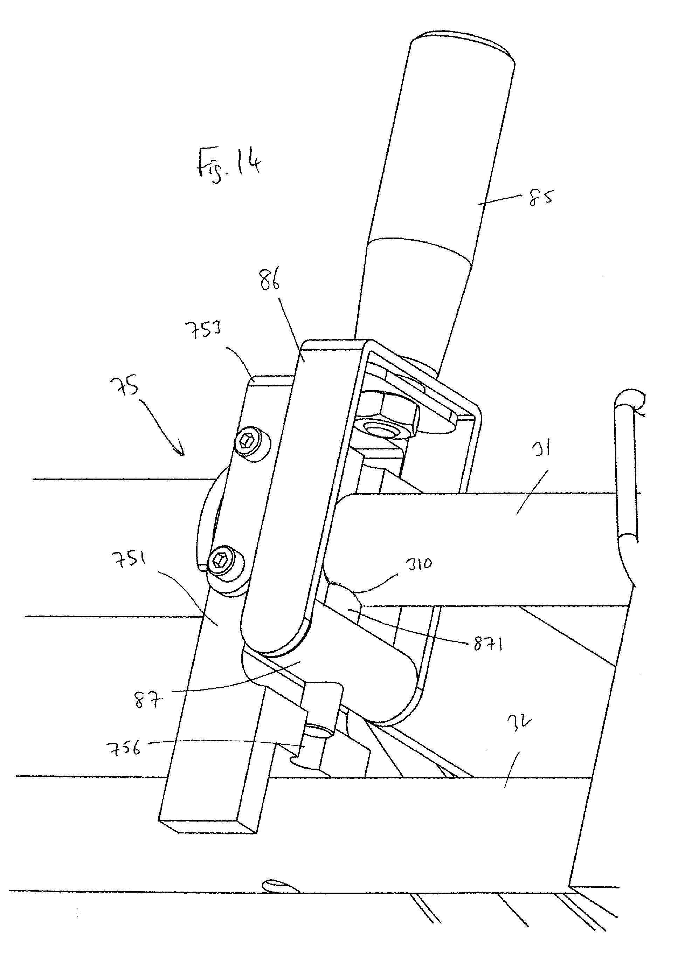

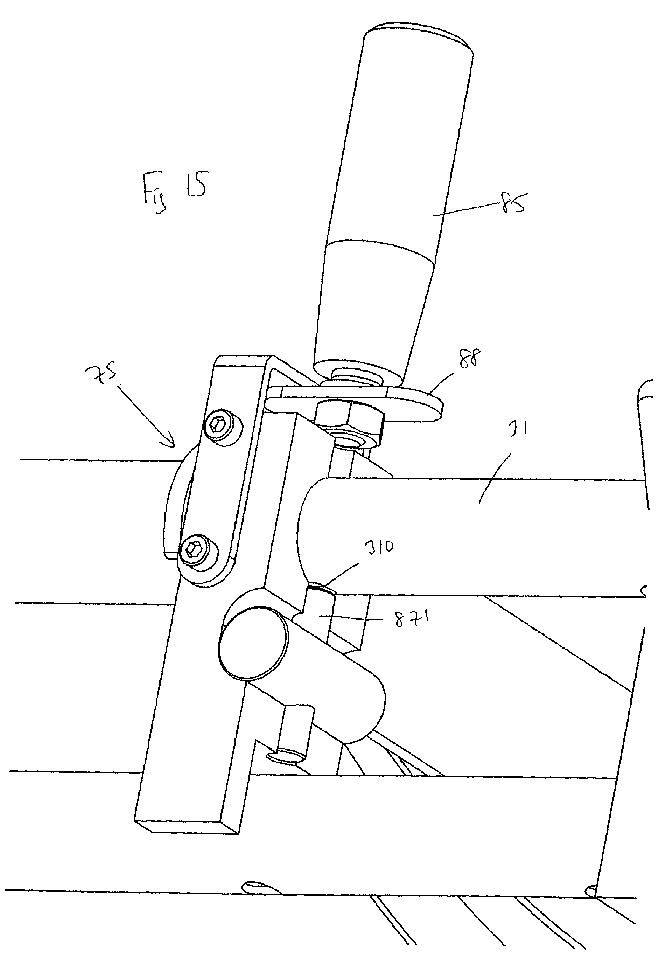

Fig. 14 shows one half of the housing block 751 broken away, showing how a cross-piece 87 extends between the ends of the fork 86 and a locking pin 871 transfixes this cross-piece, extending coaxially with the handle 85 above. A lower end of the locking pin 871 is guided in a guide bore 756 through the bottom of the housing 751. The upper transverse frame element 31 has one or more location holes 310 and, with the slider 75 brought into register with this, the locking pin 871 moves upwards - with concomitant upward movement of the handle and fork 85,86 - to engage in this hole 310 and fix the lateral position of the seat unit. The handle/fork 85,86 is spring-biased to the locked, upward condition shown in Fig. 14. However the handle 85 is mounted rotatably through the top of the fork 86 and carries an elongate catch member 88. When aligned with the top part of the fork this catch member 88 can rise between the two U guides 753, allowing the spring to bias the locking pin 871 interlocking engagement when the slide 75 is brought into alignment with the location hole 310 in the frame member 31. When however the user twists the grip 85 to swing the catch 88 to the position shown in Fig. 15, the catch member 88 engages in the clearances 754 beneath the tops of the guide element 753 and prevents the handle/fork 85,86 from rising under the influence of the spring. Therefore, as shown in Fig. 15, the slider 75 remains slidable and unlocked even when in register with the location hole 310 in the frame element 31. The rider therefore retains control, by means of either the right or the left hand, of whether the seat unit is locked at a given location (in this embodiment locking holes are provided only for a single position to the left, a centre position and a single position to the right) or whether it is freely slidable past or between these positions.

## Claims

1. A kart having a seat unit mounted transversely movably relative to the body of the kart.

2. A kart according to claim 1 which is a free kart, to be powered by wind.

3. A kart according to claim 1 or 2 having three or four wheels.

4. A kart according to any one of the preceding claims in which the seat unit is mounted transversely slidably in the kart body.

5. A kart according to any one of the preceding claims having a laterally-extending track or rail structure along which the seat unit is laterally movable.

6. A kart according to claim 5 in which said track or rail structure has front and rear sub-structures to support the seat unit at front and rear positions.

7. A kart according to any one of the preceding claims in which a lateral location arrangement enables the lateral position of the seat unit to be releasably secured at a selected position.

8. A kart according to claim 7 in which the lateral position is securable at any of plural different selected positions.

9. A kart according to claim 7 or 8 in which the lateral location arrangement has a lock or clamp operable by one hand.

10. A kart according to any one of the preceding claims having two laterally-spaced steerable wheels controlled by a foot-operated steering system.

11. A kart according to claim 10 in which a foot-operable steering control member is connected to a braking system, and is mounted for steering control in one sense of its movement and braking control in another sense of its movement.

12. A kart according to any one of the preceding claims having a frame with a modular construction enabling interchange of longitudinal and/or transverse elongate frame elements.

13. A kart according to any one of the preceding claims having a frame in which different elements are joined by standard joints to enable the connection of various components or modules into or onto the structure.

14. A kart according to any one of the preceding claims adapted for use on soft ground surfaces, in which one or more of the kart wheels has an annular projection which projects radially beyond the main ground-engaging surface of the wheel to sink into the ground, being axially narrower than the main ground-engaging surface of the wheel.
